**Europäisches Patentamt**

**European Patent Office**

**Office européen des brevets**

(19)

(11) Publication number : **0 091 190 B2**

# (12) NEW EUROPEAN PATENT SPECIFICATION

(45) Date of publication of the new patent specification : **03.03.93 Bulletin 93/09**

(51) Int. Cl.⁵ : **G11B 15/46,** G11B 5/58, G05D 13/62

(21) Application number : **83301018.4**

(22) Date of filing : **25.02.83**

(54) **A programmable nonlinear speed control for a recording and/or reproducing apparatus.**

(30) Priority : **02.04.82 US 364962**

(43) Date of publication of application :
**12.10.83 Bulletin 83/41**

(45) Publication of the grant of the patent :
**11.05.88 Bulletin 88/19**

(45) Mention of the opposition decision :
**03.03.93 Bulletin 93/09**

(84) Designated Contracting States :
**CH DE FR GB LI NL**

(56) References cited :
**EP-A- 0 037 738**
**GB-A- 2 017 352**
**GB-B- 1 579 854**
**US-A- 4 358 798**

(56) References cited :
**IBE INTERNATIONAL BROADCAST EN-
GINEER, vol. 12, no. 176, March 1981, pages
18-26, Eton, Berks., GB L.V. HEDLUND: "The
TR-800 VTR- a computer-based total system
design"**
**IEEE TRANSACTIONS ON CONSUMER ELEC-
TRONICS, vol. CE-27, no. 1, February 1981,
pages 71-78, New York, US Y. KOBORI et al.:
"One chip servo system LSI for home VCR"**
**Fernseh- und Kino-Technik; 35. Jahrgang, Nr.
3/81: Ein computergesteuertes MAZ-System
nach Standard "C"**
**Prospekt der Fa. Sony (1979)BVE 500 ACE
The TR-800 VTR - a Computer-Based Total
System Design"**

(73) Proprietor : **AMPEX CORPORATION**
**401 Broadway M.S. 3-35**
**Redwood City California 94063-3199 (US)**

(72) Inventor : **Louth, Kenneth**
**353 Bellevue Court**
**Los Altos California (US)**

(74) Representative : **Horton, Andrew Robert Grant
et al**
**BOWLES HORTON Felden House Dower Mews
High Street
Berkhamsted Hertfordshire HP4 2BL (GB)**

EP 0 091 190 B2

## Description

The present invention generally relates to servo systems for recording and reproducing apparatus and, more particularly, to a programmable non-linear speed control for a microprocessor controlled servo system for a magnetic tape recording and reproducing apparatus.

It is readily appreciated that video recording and reproducing apparatus, particularly, apparatus that records and reproduces video information of broadcast quality, is highly technical and complex equipment that requires sophisticated electronic as well as mechanical components and systems. For broadcast quality recording and reproducing apparatus, particularly video tape recording and reproducing apparatus, the level of technical sophistication is extraordinary in terms of the amount of control that is required to reliably operate the apparatus at broadcast quality standards. Such videotape recording apparatus have a number of servo systems which control their operation, including a servo system for controlling the rotation of the scanning drum carrying the recording and reproducing transducers or heads, the servo system which controls the reel drive motors which drive the supply and take-up reels and the capstan servo system which controls the speed with which the tape is driven during recording and reproducing.

Relatively recent developments in recording and reproducing apparatus include a servo system which controls a movable element carrying the reproducing head (or beads) on the scanning drum which movable element is controlled to have the reproducing head follow a track during reproducing thereof so as to permit broadcast quality reproducing during special motion effects, i.e., when the tape is being moved at a speed other than the speed with which it was moved during recording. The movable element moves the head in a direction that is transverse relative to the longitudinal direction of the track to enable it to accurately follow a recorded track and produce a quality signal regardless of whether the tape is being moved at a speed faster than normal record speed which results in a fast motion effect, or if it is moved at a slower than normal speed which results in a slow motion or even stop motion (still frame) effects. The considerations involved in such special motion reproducing effects are comprehensively set forth in our GB-B-1579854.

It will become apparent from the following description that the automatic scan tracking servo will cause the reproducing head to accurately follow a track during special motion reproducing, which include still frame reproducing, slow motion reproducing and faster than normal motion reproducing. Such variable motion control is preferably accomplished by a potentiometer located on the front of the recording and reproducing machine although a remote control device can also be used with the present apparatus. The potentiometer controls the speed of movement of the tape via the capstan servo and the automatic scan tracking servo maintains the head on a track during reproducing at any of the variable speeds. Thus, to control the special motion effect speed during reproducing, the servo systems of the present invention cooperate to produce the desired effect.

The potentiometer provides an analog output signal that is provided to an analog-to-digital converter which converts the potentiometer setting to an 8-bit word which is applied to the microprocessor and is subsequently forwarded to the capstan servo to control the servo at the proper speed. When the potentiometer setting is set to produce very slow slow motion reproducing, a one unit change in the potentiometer setting may result in a very small percentage change in the speed of the reproducing. However, a similar one unit change at high speed, i.e., faster than normal motion reproducing, may result in a significant percent change in the speed. Such linearity does not contribute to the desired feel of the potentiometer by an operator who is controlling the same for a broadcast, for example.

Accordingly, it is a general object of the present invention to provide a programmable nonlinear speed control for the capstan servo.

A further preferred feature of the present invention is to provide a speed control of the foregoing type which provides vernier control of speed changes where such vernier control is desirably located, and concomittently does not provide an excessive amount of undesirable vernier control when it is not required.

Another further preferred feature of the present invention is to provide a speed control of the foregoing type which provides greater vernier control of the speed at high speed, i.e., greater than normal speed reproducing.

A further feature of the present invention is to provide a speed control of the foregoing type which also provides delay in the response to the speed control changes at high speed so that rapid and visually disruptive changes will not be experienced by a viewer.

It is known from IEEE Transactions on Consumer Electronics Volume CE-27, No.1 February 1981, pages 71-78 to provide a speed control apparatus for controlling the transport speed of tape in a magnetic tape recording and reproducing machine, comprising a servo for moving the tape at a transport speed determined by the frequency of a reference signal. A change in speed between normal speed and several distinct transport speeds is achieved by a switching arrangement which alters the frequency of the reference signal.

It is known from GB-PS-1579854 to provide a magnetic video tape recording and reproducing machine which is capable of producing special motion effects at various speeds and has a transducing head that is movable transversely of a track of video information on the tape, said apparatus comprising a servo means for controlling the transverse movement of the transducing head that is movable to accurately follow a track during reproducing of a track and to selectively automatically position the head to begin following the next desired track subsequently of the completion of the following of a track, and a capstan servo for moving the tape during reproducing.

It is known from a brochure published by Sony Corporation, entitled "Automatic BVE 500 ACE editing control unit" (1979) to provide for a video recorder a speed control which provides a non-linear relationship between the angular displacement of a manually rotatable knob and the tape speed of the recorder.

The features of the precharacterising part of the broadest claim are known from "Fernseh- und Kino-Technik", 35-Jahrgang Nr.3/81 pp. 82-90, which discloses speed control apparatus for controlling the transport speed of a tape in a magnetic tape recording and reproducing machine, comprising a servo for moving the tape at a transport speed determined by the frequency of a reference signal, and, for providing adjustment of the transport speed throughout a range, a programmable counter which divides the frequency of an input signal by a variable preselected number to provide the reference signal, positionally adjustable means for providing a speed control signal, and processing means including a microprocessor for providing said preselected number to said counter the processing means providing the speed control signal in the form of a digital word of which the value corresponds to the position of the positionally adjustable means. Relative to that prior art the invention is characterised in that the microprocessor performs a multiplication of the said digital word by a non-linear function to provide said variable preselected number, the input signal for the counter is a high frequency clock timing signal, and the output of said counter is the reference signal.

Description of the drawings

Figure 1 is a functional block diagram illustrating the functional interaction of the micro-processor with the various servo systems of the apparatus, and of the microprocessor and other important circuitry;
Figure 2 is another functional block diagram of the microprocessor and illustrates the manner in which it receives input information relating to the operation of the apparatus and provides output signals that are used to control the operation of the apparatus;
Figures 3a and 3b are very broad flow charts illustrating the softvrare functional operation of the microprocessor;
Figure 4 is a functional block diagram of the automatic scan tracking servo;
Figure 5 is a functional block diagram of the error correction circuitry for the automatic scan tracking servo;
Figure 6 is a functional block diagram the tape sync processing circuitry;
Figures 7a and 7b together comprise a detailed electrical schematic diagram illustrating the microprocessor together with machine control interfacing circuitry and multiplexing analog-to-digital converting circuitry;
Figure 8 is a functional block diagram of the capstan servo system;
Figures 9a, 6a and 9b together comprise a detailed electrical circuit schematic diagram of the capstan servo circuitry of the apparatus, which detailed circuitry carries out the operation of the block diagram of Figure 5; and
Figure 10 illustrates several graphs of the transfer function for the capstan servo, particularly illustrating the non-linear transfer function of the variable speed potentiometer control and the resulting capstan speed.

Description of the apparatus

Broadly stated, the non-linear speed control embodying the present invention is primarily associated with the capstan servo which is but one of the servo systems that includes a micro-processor which effectively controls all of the major servos of a tape recording and reproducing apparatus. The servos include: 1) a scanning drum servo which rotates the recording and reproducing heads at the proper speed during operations; 2) the automatic scan tracking servo which controls transverse movement of the reproducing head relative to the longitudinal direction of the track to have it accurately follow a track during reproducing and particularly during reproducing for special motion effects wherein the tape is being transported at a speed other than normal playback speed; 3) the reel servos which control the tensioning of the tape during recording and reproducing operations and the movement of the tape during shuttle operations; and, 4) the capstan servo which controls the movement of the tape during recording and during reproducing operations with the exception of still frame reproducing. The microprocessor receives digital information as well as digitally converted analog information from various locations throughout the circuitry and apparatus, processes such information and thereafter provides digital output signals to other circuitry, some signals of which are converted into the analog domain for controlling the various operations that are performed by the apparatus in its various modes. As stated in the foregoing introductory paragraphs, the automatic scan tracking servo effectively controls the transverse movement of the reproducing head to have it follow a track during reproducing a such is automatically done regardless of the tape speed, provided the tape speed is within appropriate limits of the apparatus. Since the non-linear control of the apparatus primarily involves the longitudinal movement of the tape which is controlled by the capstan during reproducing at all speeds except stop or still frame reproducing, the capstan servo will only be described herein. The other servos, including the automatic scan tracking servo, are comprehensively described in our European Patent Application No. 83301016.8 (published as EP-0091188-A1) filed 25th February 1983 entitled "Microprocessor Controlled Multiple Servo System for a Recording and/or Reproducing Apparatus", and based on United States Patent Application Serial No. 364725 filed 2nd April 1982. The specification and drawings for such application is specifically incorporated by reference herein. While the capstan servo will only be specifically described, it will be described in connection with the microprocessor control and other environment including specific circuitry that is necessary to provide an understanding of the operation and construction of the capstan servo.

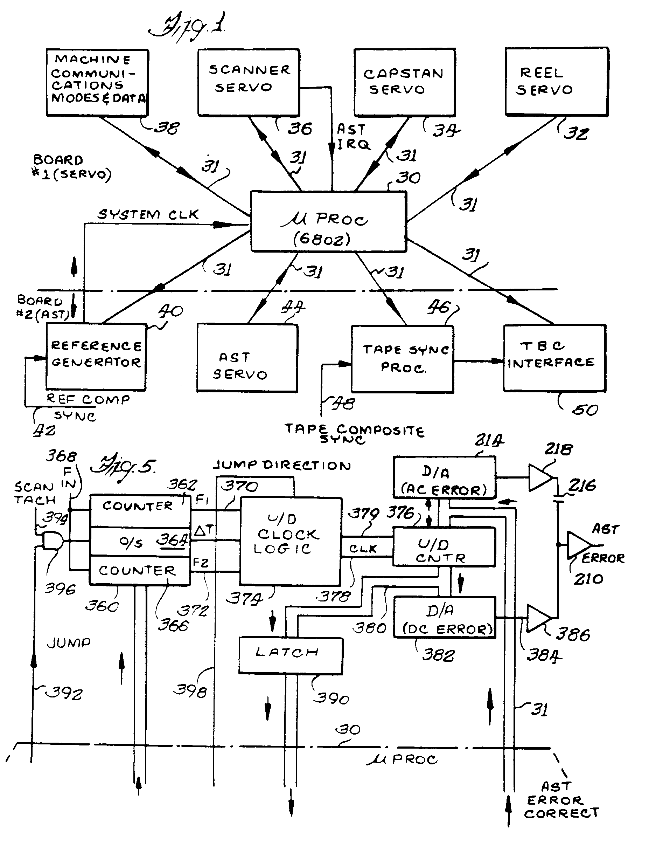

Turning initially to the block diagram of Figure 1, there is shown a microprocessor 30 which is interconnected by a data bus 31 with a reel servo 32, a capstan servo 34, a scanner servo 36 and a machine communication interface and data 38 which essentially controls the various modes of the recording and reproducing apparatus as manipulated by an operator or from a remote location. The microprocssor also interacts with a reference generator 40 which receives as an input thereto a reference station composite sync signal via line 42 and the reference generator generates system clocks which clock the microprocessor and which in turn synchronizes all of the clock timing of the servos and other circuitry. The microprocessor also interacts with the automatic scan tracking servo 44 and a tape sync processor 46 which has a tape composite sync signal input via line 48. The tape sync processor additionally provides a signal to the time base corrector interface 50 which provides appropriate timing and control signals for use by the time base corrector to provide a broadcast quality video image having the requisite stability and vertical position with respect to system reference as well as the correct chroma information, which processing varies depending upon what reproducing mode the apparatus is being operated.

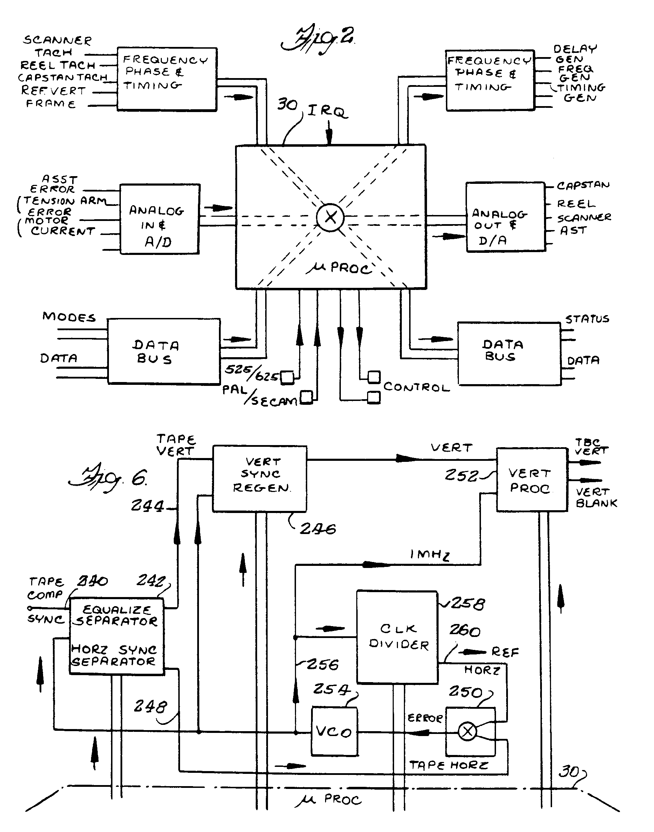

While the functional block diagrams shown in Fig. 1 illustrate the interaction of the micro-processor with the various servo systems of the apparatus, with machine control and with the time base corrector and the like, the system can also be functionally described in terms of input and output signals that are provided to and from the microprocessor and this functional block diagram is shown in Fig. 2. The microprocessor 30 receives frequency, phase and timing data shown by the upper left functional block including such input signals as scanner tach pulses, reel tach pulses, capstan tach pulses, reference vertical and frame timing signals, which is converted into digital information for processing by the micro-processor. The microprocessor also receives analog information shown by the block left of the microprocessor which is converted into digital information for processing by the microprocessor and such analog input signals include the automatic scan tracking error signals, the tension arm error signals and various motor currents from the reel drive motors the capstan drive motor and the scanner drive motor. The data bus also receives operating mode information as well as other machine control data and it processes this information and provides status information and other data. The microprocessor generates digital information which is converted to analog information and these analog output signals include control signals for the capstan servo, the reel servo, the scanner servo and the automatic scan tracking servo. Similarly, the microprocessor provides frequency, phase and timing output information which include delay signals, phase and timing output information that are used by the various servos and other circuits.

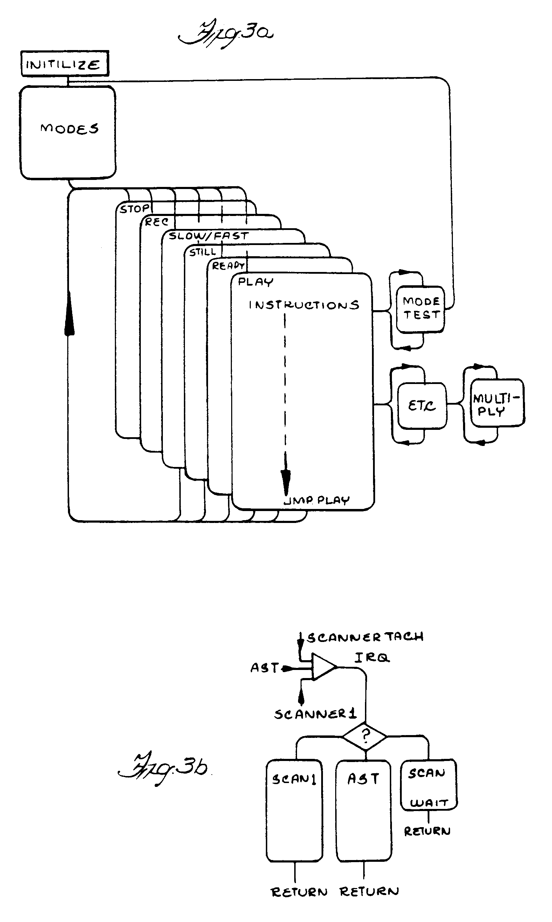

The apparatus is programmed to operate in various operating modes as is shown in the broad flow chart of Figure 3a. The flow chart representing microprocessor softvrare shows that once the machine is initialized, a mode is selected and these modes include stop, record, slow and fast motion reproduce, stop motion or still frame reproduce, ready and normal play. Once the apparatus is placed in an operating mode, then it undergoes a mode test to determine if it is a valid mode and if such is the case, it will return to that mode and begin running the program that controls the apparatus in that mode. If the mode test is invalid, then it will return to the stop mode and the apparatus will stop. After the apparatus is placed in a valid mode, it will continue in that mode until some event occurs, such as a mode change or a completion of some operation. Included as part of each operating mode are various subroutines which are called as shown in Fig. 3a. Certain ones of these subroutines are used in various ones of the operating modes. For example, the play mode will contain a block of code instructions that will call up various subroutines in the specified order. As long as the apparatus is operating in the play mode it will repetitively go through this block of code instructions. When the scanner tachometer pulse occurs, it will cause an interrupt to the microprocessor as shown in Fig. 3b.

The microprocessor operates on an interrupt basis, with an interrupt resulting from one of three inputs. The softvrare determines which input caused the interrupt and the micro-processor then enters the appropriate block of code which runs through various subroutines until it reaches the end and then returns to the instruction that had previously been completed prior to the interrupt. The scanner tachometer pulse originally triggered a counter which has a count that exceeds the maximum time required to store all current relevant information in stack registers in the microprocessor. When this is done, it is ready to immediately perform the instructions in the scanner 1 block of code. This is carried out by the scanner interrupt block of code which causes the microprocessor to store the information and then literally wait for the scanner 1 interrupt. After the scanner 1 block of code is run, the microprocessor removes the information from the stack registers and resumes running through the instructions specified by the operating mode.

Broad automatic scan tracking servo description

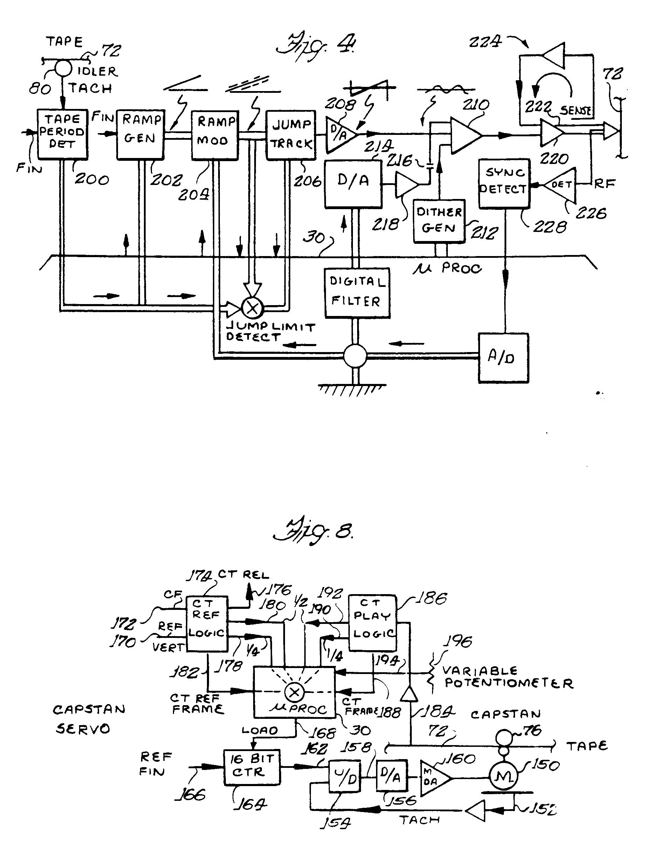

A preferred embodiment of the invention includes a microprocessor controlled automatic scan tracking servo, which will now be broadly described in conjunction with the block diagram of Figure 4. A more detailed description of the automatic scan tracking servo is given in the aforementioned European Patent Application No. 83301016.8, particularly Figure 14 thereof.

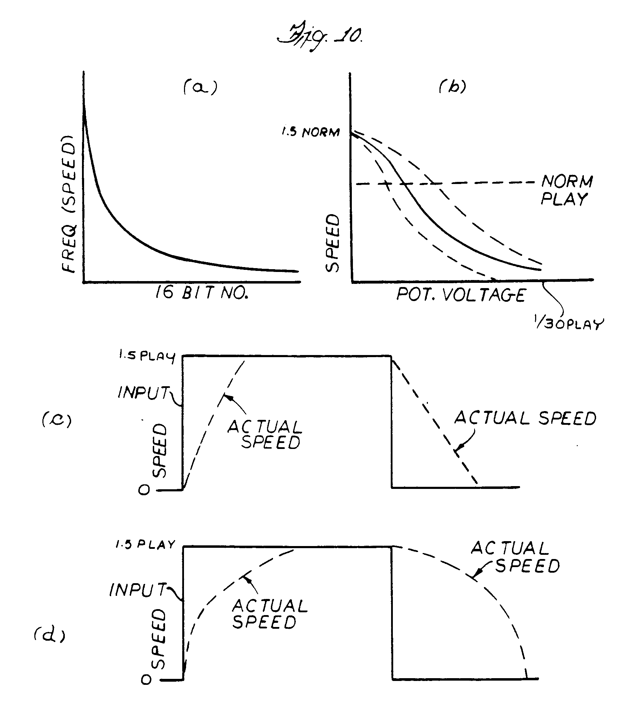

The automatic scan tracking functional block diagram shown in Figure 4 (which corresponds to Figure 11 of the aforementioned European Patent Application) controls the automatic tracking of the head during reproducing in the various operating speed modes such as slow motion, still frame or fast motion. As shown in Figure 4, the idler 80 tachometer provides pulses to a tape period detector 200 which essentially measures the speed of the movement of the tape and does so by measuring the period of tape movement very accurately. The tape period detector effectively measures the frequency for the purpose of predicting the desired position of the head as a function of the tape speed. The tape period detector provides two 8-bit words to the micro-processor 30 which perorms two functions utilizing the calculated period. The microprocessor applies a digital word to a ramp generator 202 which is actually an error generator which generates a digital equivalent of a voltage ramp signal whose slope is a function of speed. In effect it is generating a predicted tracking error which comprises a voltage whose slope increases as the tape speed is increased. Conversely, the slope of the voltage decreases as the tape speed decreases. The tracking error output is applied to a modifier circuit 204 which either increases or decreases the value, i.e., modulates the predicated ramp tracking error signal in accordance with d.c. errors that are detected. It effectively modifies the tracking error or slope of the ramp in order to obtain a true ramp tracking error signal that maintains the head accurately on the track during reproducing. The tape speed is also compared with the output of the modifier to determine if a track jump command should be issued. In other words, if the elevation of the head, i.e., the transverse position thereof, at the appropriate time during each revolution is such that considering the speed that the tape is being moved, it will reach a particular extended position, then a jump command will be issued to the jump track block 206 which will add a jump signal to the ramp tracking error signal at its output. The composite ramp tracking error signal is generated digitally and is converted by a digital-to-analog converter 208 to analog form for application to a summer 210 which sums the converted signal with that produced by a dither generator 212 and with an a.c. coupled error signal from a digital-to-analog converter 214 via capacitor 216 and amplifier 218. The summed signals are applied to a drive amplifier 220 which drives a deflectable piezo-ceramic bimorph element 222 carrying the video transducing head. An electronic damping loop, indicated generally at 224 and which may b e as described in British Patent No. 1579856, is provided. Also, the RF signal from the video head is applied to an amplitude modulation detector 226 which detects the RF signal having an envelope with an amplitude and phase which vary in accordance with the dither signal that is applied thereto by the dither generator 212 and the position of head relative to the recorded track. This detected signal is in turn synchronously detected by a synchronous detector 228 to provide an analog positional error signal that is converted from the analog to a digital domain by the analog-to-digital converter within the micro-processor. This digital error signal is compared with a zero signal (ground) and the micro-processor provides the d.c., error for modifying the error signal via the ramp modifier 204. The signal is also applied to a digital filter within the microprocessor which detects high rate geometric errors caused by distortions in the track or the like and its output is applied to the digital-to-analog converter 214 for analog conversion and combining with the ramp tracking error signal.

With respect to the operation of the digital filter shown in Figure 4, it performs an intergrating operation which is essentially an averaging function that is accomplished in the microprocessor. It essentially operates by utilizing three memory locations and performs an averaging of each sample location over several revolutions to obtain an average value for each of the sample locations. For each sample location, a digital number corresponding to the averaging operation is applied to the digital-to-analog converter 214 of the a.c. error correction circuitry. Basically, at the first memory location, the most recent sample is averaged with the preceding samples by adding the value of the averaged preceding samples to the new most recent value and dividing by two. This value is then inserted into the first memory location. The second memory location utilizes the value placed in the first sample location with the preceding average value in the second location and sums them, divides by two to obtain the new value for the second memory location. The third memory location adds its previous average value with the new value from the second memory location, divides by two to provide a new value in the third memory location. This becomes the output of the digital filter which is applied to the digital-to-analog converter 214 and a.c. correction circuitry.

Error correction circuitry

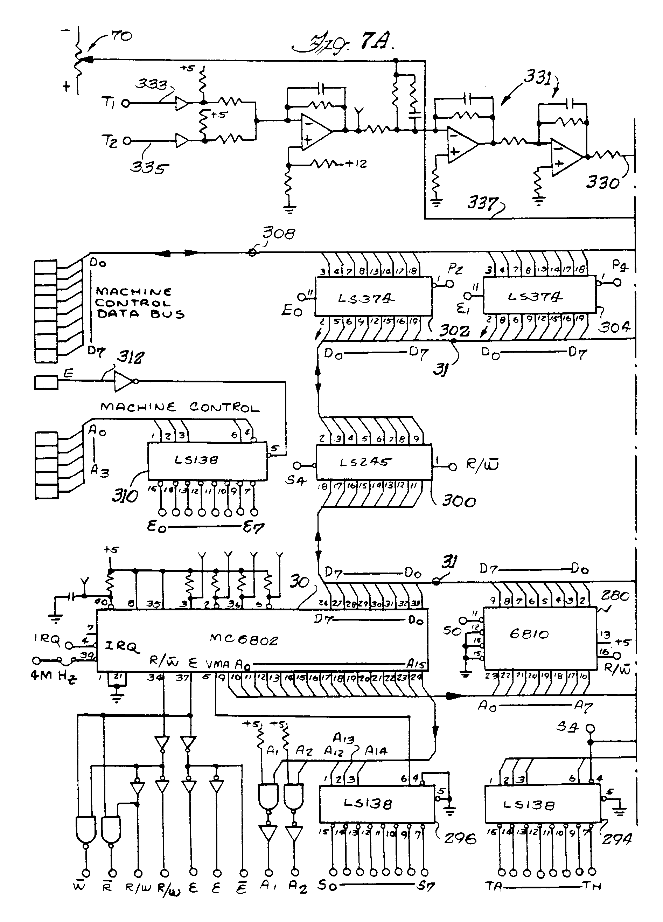

While the automatic scan tracking servo has been functionally described with respect to Figure 4 which illustrates the manner in which jumps are performed and error correction accomplished, the manner in which the error correction is carried out is shown in the block diagram of Figure 5. Referring to the block diagram shown in Figure 5, the microprocessor 30 communicates with a programmable timer chip 360 which has counter sections 362, 364 and 366, the section 364 of which operates as a one-shot multivibrator. A 1 MHz input signal on line 368 clocks the counters 362 and 366 and they operate such that counter 362 provides an output frequency count on line 370 that is fixed (although at different rates depending upon whether it is a 525 line or 625 line system). The counter 366 is programmable and provides a variable frequency output on line 373 which counter varies in accordance with the 16-bit words that is applied via the data bus 31 which reflects the tape speed period. Up/down counter clock logic, indicated generally at 374, effectively controls a clock rate which is a function of the difference between the frequency of the signals on lines 370 and 372 and the clock clocks an up/down counter 376 via clock line 378 with an up/down control line 379 also being controlled by the up/down counter clock logic. The incrementing or decrementing of the counter 376 generates the ramp slope which is the predicted value determined by the tape speed. The up/down counter provides an 8-bit value representing d.c. error signal on lines 380 which extend to a digital-to-analog converter 382 that has an analog output line 384 which applies the d.c. error signal to an amplifier 386 and to the amplifier 210. The lines 380 also are applied to a latch 390 that latches the value of the up/down counter and the microprocessor uses this 8-bit word to determine the position of the head for the purpose of determining whether a jump is to be made at the appropriate time. If a jump is to occur, a jump command on a line 392 will occur and when the scanning drum tachometer signal on line 394 is present, AND gates 396 will provide a signal to trigger the one-shot 364. A jump direction signal on line 398 is also applied to the clock logic 374 for determining the proper direction of a jump. The d.c. correction loop utilizes the information that is latched in latch 390 and after processing, the microprocessor applies data via the data bus 31 to hard load the up/down counter 378 for the purpose of further incrementing or decrementing the count to apply the d.c. positional correction. At a different time the microprocessor hard loads the digital-to-analog converter 214 which provides an output to the amplifier 218 that is capacitively coupled by capacitor 216 to the amplifier 210. The up/down counter can be controlled by the counters 362 and 366 and additionally can be hard loaded by the microprocessors to provide the a.c. and d.c. error correction which results in the final automatic scan tracking error signal.

Detailed circuitry which carries out the operation of the functional block diagram of Figure 5 is shown in the aforementioned EP-0091188-A and particularly Figures 21 a and 21 b thereof but need not be described herein for the reason that it operates as described with respect to the block diagrams of Figures 4 and 5.

Broad tape sync processing circuitry description

With respect to the tape sync processing circuitry of the apparatus embodying the present invention, reference is made to the clock diagram shown in Figure 6 which is shown having the microprocessor 30 interfacing with several of the blocks shown therein for the purpose of changing values in various components depending upon whether the recorder is adapted to operate as an NTSC video recorder with 525 vertical lines per frame or as a PAL or SECAM recorder with 625 horizontal lines per frame. The block diagram is shown to have a composite sync signal from tape during reproducing applied via line 240 to an equalisation pulse separator and horizontal sync separator circuit 242 which has an output line 244 which extends to a vertical sync regenerating circuit 246 and another output line 248 which applies an off-tape horizontal signal to a comparator 250 comprised of a digital sample and hold circuit. The vertical regenerator 246 provides a vertical sync signal to vertical processing circuitry 252 which provides a time base corrector vertical sync signal to the time base corrector circuitry and vertical blanking signals to the signal system circuitry during reproducing. The comparator 250 is part of an automatic frequency control loop that has a voltage controlled oscillator 254 having an output line 256 extending to the vertical processor 252 and to a clock divider circuit 258 which has its division number supplied by the microprocessor. The division number is different depending upon whether the recording apparatus is operating in a 525 line or 625 line system. The divider output line 260 is applied to the other input of the comparator 250 so that the comparator compares the reference horizontal with the tape horizontal, provides an error signal to the voltage controlled oscillator 254 for properly controlling the frequency output from the voltage controlled oscillator 254. As is evident from the control loop, the output of the voltage controlled oscillator 254 is synchronized to off-tape horizontal sync. Moreover, the output of the tape sync processing circuitry is synchronized to off-tape sync so that if the tape speed is increased or decreased, the horizontal and vertical sync signals will vary in accordance with the proper timing to maintain the synchronism. The vertical regenerating circuitry is also adapted to be free running even though equalization pulses may not be present from the equalization pulse separator. This is required because of the fact that if the elevation of the reproduce head is extended relative to its nominal desired position, equalization pulses may not be reproduced and detected by the separator 242. The system therefore provides free running capability to apply equalizati on pulses where they should be if they are in fact not detected so that the vertical sync signals will continue to be present for operating the time base corrector. The system has another operational advantage in that if the recorder is turned on for the first time and the head is at an extended elevation or position such that no equalization pulses are being detected, it cannot supply them at the appropriate time because it has no memory of their previous occurrence. In such instance, the microprocessor measures the elevation of the AST head and determines if it is in fact at an improper elevation to receive equalization pulses and if such is the case, then it will command a two track shift so that it will be placed in position where it will receive equalization pulses and will begin proper operation.

Broad capstan servo description

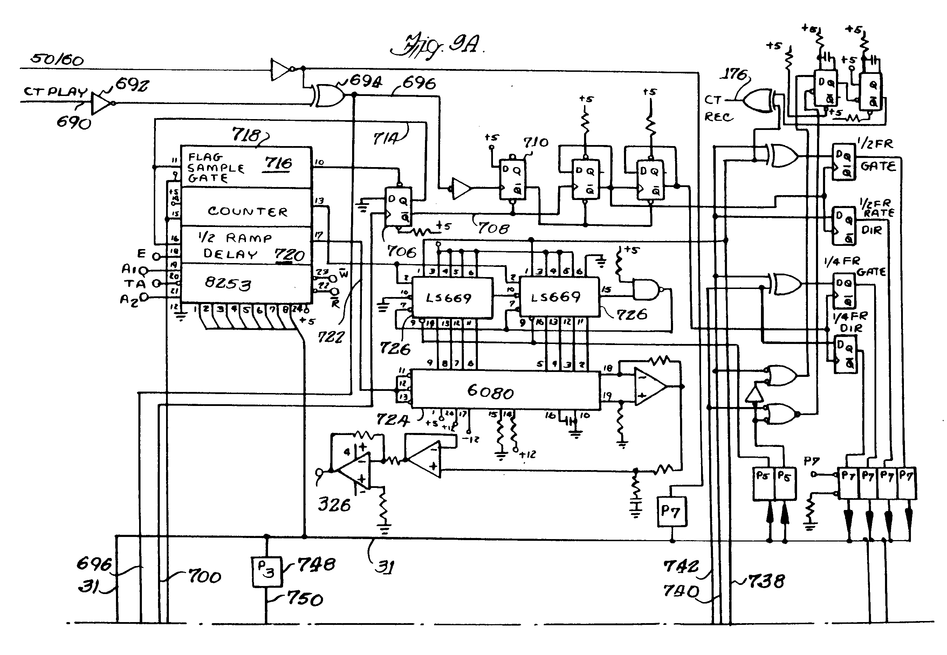

Turning now to another important aspect of the present embodiment, the capstan servo is illustrated by the functional block diagram of Figure 8. The capstan servo functional block diagram has the tape 72 being controlled by the capstan 76 which has a drive motor 150 with an associated tachometer, the tachometer providing tachometer pulses on line 152 which provides an inner servo loop function. The tachometer signal is applied to an up/down counter 154 the output of which is applied to a digital-to-analog converter 156 via line 158 and its output is fed to a motor drive amplifier 160 that controls the motor 150. The up/down counter 154 also has an input line 162 provided by a 16-bit counter 164 which has as a reference frequency a 4 MHz signal applied thereto via line 166. The counter essentially controls the frequency of the reference signal that is applied to the up/down counter through its output line 162. The microprocessor 30 loads a number into the counter via line 168 which essentially controls the output frequency on line 162. Varying the number that is loaded into the counter 164 changes the division function to thereby vary the output reference signal frequency and thereby vary the speed of the capstan. The upper left hand portion of the block diagram illustrates the control track reference logic function which has inputs comprising the reference vertical information via line 170, the color framing information via line 172. These signals enable logic circuitry 174 to generate a control track record signal on line 176, 1/4 frame and 1/2 frame rate signals on lines 178 and 180 and a control track reference frame signal on line 182 which latter three signals are applied to and used by the microprocessor 30 as shown. On the right side is a similar functional circuit which utilizes control track playback signal information from line 184 obtained from the tape during reproducing. Control track play logic circuitry 186 provides a control track frame rate signal on line 188, 1/4 frame and 1/2 frame rate signals on lines 190 and 192, which signals are also applied to the microprocessor. The microprocessor determines whether the recorder must perform a color frame match operation. If the apparatus is operating as a 525 line NTSC recording and reproducing apparatus, it will color frame match using the 1/2 frame rate signal and if it is operating as a 625 line PAL or SECAM system, it will color frame match using the 1/4 rate signal. The control track play logic therefore is adapted to control the tape so that proper color framing is achieved if required to guarantee normal framing is achieved at all times.

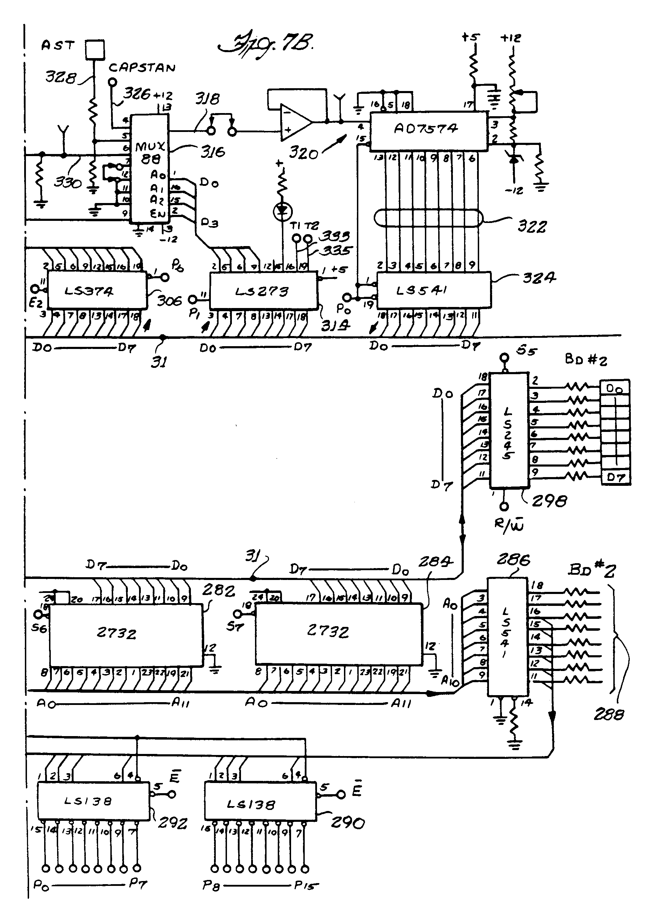

There is also an input line 194 to the microprocessor which applies a signal from a variable control potentiometer 196 on the front panel of the recorder which controls the capstan and therefore the tape speed. The variable control signal is converted from analog to digital form for use by the microprocessor, which could be done by the analog-to-digital converter shown in Figures 7a and 7b if desired. The digital variable control signal is applied to the microprocessor when then applies a corresponding digital word to the counter 164 for controlling the speed. As will be hereinafter described, the control is non-linearized and programmable to provide non-linear control of capstan speed as a function of the potentiometer position and the acutal tape speed. In other words, most of the possible rotational movement of the potentiometer will control the speed in the range from 1/30 of the normal play speed to 1/2 of the normal play speed and a small amount of the rotation of the potentiometer will control the speed from 1/2 of the normal play speed to normal speed and fast motion. This. permits the range of actual rotation of the potentiometer to be most fully utilized in the range of speed where more accurate control is desired. Since it is programmable, it desirably places the vernier control where it is most appropriately used. The non-linearizing function permits the operator to distribute the feel of the potentiometer to be programmed to the picture that is to be seen during slow motion.

Additionally, when there is a change between one very slow slow motion speed and another slightly faster slow motion speed, and it is changed from one to another, the microprocessor is programmed to change rapidly between the two speeds. However, when the speed is approaching normal speed, then the actual change from one speed to another will be made more slowly. The transport handles these differences in the change at the various speeds more easily, but also as the picture is viewed, rapid changes that occur during extremely slow slow motion playback are more comfortable to a viewer than rapid changes that occur during slow motion speeds that approach normal speed reproducing.

The microprocessor circuitry

Before describing the detailed electrical circuit schematic diagrams of the various servos that have been previously described with respect to functional block diagrams, the schematic diagrams which contain the microprocessor 30 itself will be briefly described in connection with Figures 7a and 7b which together comprise a single schematic. As previously mentioned, and as has been shown by the block diagram of Figure 1, the bulk of the circuitry of the apparatus described herein is contained on only two printed circuit boards and one of said printed circuit boards contains the microprocessor itself. The layout of the circuitry is such that address control of bidirectional buffers enable the data bus from the microprocessor to be connected to either the first or the second printed circuit board. As shown in Figure 7a, the microprocessor 30, which is a Motorola integrated circuit Model MC 6802 has 16 address lines which address circuit components as well as specific addresses of memory circuits. As shown on the lower portion of the microprocessor 30 in Figure 7a, address lines $A_0$ through $A_{15}$ extend rightwardly to a random access memory 280 which is controlled by address lines $A_0$ through $A_7$, as well as respective programmable read only memories 282 and 284 (Figure 7b) which are controlled by address lines $A_0$ through $A_{11}$. The address lines also extend to a buffer 286 which has output lines indicated generally at 288 which extend to the second printed circuit board address lines. The lines 288 also extend downwardly to respective decoder integrated circuits 290 and 292 which are used to select ports $P_0$ through $P_{15}$. The address lines also extend to yet another decoder 294 whcih provides selection of various programmable timer integrated circuits $T_A$ through $T_H$.

Decoders 290, 292 and 294 are enabled when a master decode enable line $S_4$ is active and this is provided by a master decode circuit 296 located to the left of the decoder 294. As is clearly illustrated, address lines $A_{12}$, $A_{13}$ and $A_{14}$ from the microprocessor

30 control the address selection master decode enable output lines $S_0$ through $S_7$ that activate various portions of the circuitry. For example when active, the decoded output line $S_0$ enables the random access memory 280, decode output $S_6$ enables the memory 282 and decode output $S_7$ similarly enables memory 284. The data bus 31 from the microprocessor comprises eight output lines $D_0$ through $D_7$ extending to the memories 280, 282, 284 as well as to bidirectional buffers 298 and 300. Buffer 290 has output lines that extend the data bus to the second printed circuit board, and it is activated by the decode output $S_5$. Activation of the decode output $S_4$ enables the decoders 290, 292 and 294 as well as the other bidirectional buffer 300 which effectively extends the data bus to the remaining circuitry shown in the upper portion of Figures 7a and 7b and to remaining circuitry on board No. 1.

As shown in Figure 7a, the data bus 31 has input latches 302 and 304 connected thereto and an output latch 306 being shown in Fig. 17b. The data lines 308 are also connected to these latches and the lines 308 represent a data bus to the machine control system which has a separate microprocessor controlled system for carrying out other machine control functions of the apparatus independently of the system controlled by microprocessor 30. The interaction of operator control and mode switches, diagnostics and the like with the servo system of the present invention is carried out through this data bus via the latches 302, 304 and 306. These latches are respectively enabled by enable lines $E_0$, $E_1$ and $E_2$ which are decoded outputs of a decoder circuit 310 that has operator activated address lines $A_0$ through $A_3$ from the machine control system. The decode circuit 310 is enabled by a line 312 from the machine control system. By selectively enabling decode output lines $E_0$, $E_1$ and $E_2$, data can be input into the latches 302 and 304 for communication onto the data bus of the microprocessor 30 and enabling the latch 306 permits data from the microprocessor 30 to be latched therein for communication to the machine control system via lines 308.

The remaining portion of the circuitry shown in the upper portion of Figures 7a and 7b concern the analog information input that is provided to the microprocessor 30. When port $P_1$ from decoder 292 is active, a latch 314 that is connected to the data bus can receive a data word which decodes an address for controlling a multiplexing switch 316. The switch 316 selects one of the left inputs thereof for application onto line 318 that extends to an analog-to-digital converter, indicated generally at 320, having output lines 322 which extend to a latch 324 which applies data onto the data bus for use by the microprocessor when a port line $P_0$ is enabled from the address decoder 292.

The multiplexing switch 316 can select a capstan servo control track error signal applied via line 326, an automatic scan tracking movable element position error signal applied via line 328 or a signal that is indicative of the position of the tension arm 70 applied via line 330. The circuitry at the upper portion of Figure 7a provides an analog signal on line 330 that represents the position of the previously described arm through appropriate loop compensation circuitry indicated generally at 331. The arm positional reference for forward and reverse arm locations during shuttle and still frame reproducing is set by coding lines 333 and 335 by means of the output latch 314 from the microprocessor. In addition, line 337 can be selected to measure the actual mechanical arm position for tape threading and unthreading.

The capstan servo circuitry

The capstan servo described in the block diagram of Figure 8 is carried out by the detailed circuitry shown in Figures 9a and 9b. The capstan tachometer signal is applied on line 640 (Figure 9b) which extends to a D latch which is part of the quad D latch integrated circuit 642 and the reference input frequency signal is applied via line 644. The latches are clocked by the microprocessor output clock E via line 646 and this clock also clocks an up/down counter 648, the output of which is applied to a digital-to-analog converter 650 which provides an analog output signal to the drive amplifier circuitry, indicated generally at 652. The circuitry includes a high gain section 654 and a low gain section 656 and a switching circuit 658 controlled by the microprocessor to either provide a high or low gain error signal. Line 660, controlled by the microprocessor, controls the switching circuit 658 to either apply the high gain signal from the upper circuitry 654 or the low gain signal from the lower circuitry 656 through the switcher onto line 662 which results in the capstan error signal being produced at the output line 664.

The circuitry shown in Figure 9b effectively compares the phase of the reference on line 644 with the phase of the capstan tachometer on line 640 and provides a capstan servo error signal to control the precise speed of the capstan. The illustrated circuitry has the advantage that it does not suffer from common problems that can cause a servo system to run away in that it is incapable of doing so because of the absence of any capstan direction sensitivity or any upper or lower speed limits. The circuitry provides an alalog output which achieves a phase lock without excessive overshoot and eliminates the possibility of reverse run away, even if the control variable rate, i.e., the capstan tachometer, exceeds the reference rate in the reverse direction. More specifically, common prior art capstan servos can run away in two different ways. The first can occur if the polarity of the feedback is reversed from that defined according to the normal capstan direction without a corresponding reversal of the generated error. The second way in which the capstan can run away occurs when the up-/down counter is permitted to roll-over when the count limit conditions are reached. The present circuitry automatically overcomes these problems by virtue of the fact that it automatically compensates for the capstan direction or error changes.

The circuitry uses the fully synchronous up/down binary counter 648 and appropriate gating to enable the counter and to control an up/down control line 666. The reference input and tachometer inputs are automatically guided to increment or decrement the counter 648 in accordance with the direction lines. The output of the D latches for the capstan tachometer line 640 is applied to a NAND gate 668 and the reference signal is gated through the D latch and it is connected to an EXCLUSIVE OR gate 670. The NAND gate 668 provides a low output for every positive transition of the capstan tachometer pulse and this low output signal has a duration of the clock period. The reference signal that is applied through the D latch to the EXCLUSIVE OR gate 670 produces a low signal for every transition of the reference signal and this low signal also lasts for one clock period. The output from the EXCLUSIVE OR 670 is applied to an inverter 672, as well as to one input of another EXCLUSIVE OR gate 674, with the output of the inverter 672 being applied to a NAND gate 676. The NAND gate 668 output is applied to an inverter 678, as well as to the other input of the exclusive OR gate 674. The output of the inverter 678 is applied to one input of a NAND gate 680 and the outputs of NAND gates 680 and 676 are applied to NAND gate 682, the output of which extends via an inverter 684 and line 666 to the up/down control of the up/down counter 648. The output of the EXCLUSIVE OR gate 674 is applied through an inverter 686 and line 688 to the enable the input of the up/down counter 648.

The operation of the logic circuitry is effective to control the up/down control line 666 so as to change the digital value of the counter in the proper direction to reduce the error. If the system contains no error, then the reference and capstan tachometer signals will be coincident and in such event, low outputs will be produced by the NAND gate 668 as well as the EXCLUSIVE OR gate 670 and both inputs will cause the EXCLUSIVE OR gate 674 to disable the up/down counter so that it will neither be incremented or decremented by the clock. If only one of the gates 668 or 670 is active, then the logic circuity will cause the up-/down line to be controlled at the proper signal level so as to either increment or decrement the counter in the correct direction to reduce the error. The gate 680 also has one input supplied by a capstan forward and reverse control line 689 which automatically steers the logic to control the up/down control line so as to reduce the error regardless of the direction the capstan is being driven.

In accordance with another aspect of the capstan servo, the recorded control track information is used in the conventional manner and this operation is also accomplished under micro-processor control. As shown in Figure 9a, the control track signal on input line 690 is applied through inverter 692 and EXCLUSIVE OR gate 694, whose output appears on line 696 which extends downwardly to an AND gate 698 (Figure 9b) that has its output line 700 applied to the input of a one-shot multivibrator 702 that is part of programmable timer chip 704. Line 700 also extends to clock a D flip-flop 706 (Figure 9a) which has a $\overline{Q}$ output line 708 that clears a flip-flop 710 that provides a playback flag. The free-wheeling one-shot 702 has output line 712 that extends to the other input of the AND gate 698 and the AND gate and one-shot operate to block any spurious control track signals that may be present on line 696 until shortly before the control track pulse is expected to occur, at which time the free-wheeling one-shot changes state to enable the legitimate control track pulse to be applied and be gated through the AND gate 698 and again trigger the one-shot 702. In the event that a control track pulse is not present, then the change of state of the free-wheeling one-shot 702 timing out will similarly cause an output signal on line 712 and the AND gate will provide a clock signal on line 700 to flip-flop 706 in the same manner as would an actual control track pulse. The only difference is that it will be slightly advanced relative to when it should occur which will cause a slight drift in the rate of the control track, but will not be of sufficient magnitude to create any significant problem during the time that control track is not present. An output line 714 from flip-flop 706 is applied to the input of a flag sample gate counter 716 of a programmable timer chip 718 as well as a 1/2 ramp delay one-shot 720, the latter of which provides an output on line 722 which triggers a digital-to-analog converter 724 which samples the value of up/down counter 726 which contains the digital values of the control track signal. The 1/2 ramp delay 720 effectively causes the digital-to-analog converter 724 to sample the value of the counter 726 at the mid-point of the frame signal and properly times the control track playback signal. Stated in other words, the digital-to-analog converter 724 is triggered by the 1/2 ramp delay 720 so that the control track sample which is delayed from the actual control track by 1/2 ramp delay results in the actual control track and the actual reference being in phase.

The capstan servo circuitry programmable timer chip 704 reference vertical input signal on line 730 which is applied to a tracking one-shot 732. During reproducing, the tracking one-shot is programmed to directly follow the reference vertical and apply a pulse on output line 734 which is applied to a counter divider 736 that in turn provides various output signals, such as a frame rate signal on line 738, a 1/2 frame rate signal on line 740, and a 1/4 frame rate signal on line 742. During normal operation, the frame signals will be synchronized to reference vertical and is phase adjustable by operation of the control track phase control.

In accordance with an important aspect of the present apparatus, a very significant functionally desirable capability is possible by virtue of the programmable timer chip 704 and particularly the tracking one-shot 732 therein in that it can be reprogrammed to operate as a rate generator and provide an output that varies slightly relative to the input reference. Thus, the output signal on line 734 may be one count in 40,000 counts different relative to the reference vertical or any other difference can be programmed by the microprocessor so that a definite time compression or expansion of the reproduction can be obtained if desired. This would permit an entire program to be speeded up or slowed down to fit the time slot that is desired and it can be done without removing any particular segment of the program. All that needs to be done is to reprogram the tracking one-shot section of the timer chip 704 to provide a time difference that will result in either a time expansion or compression of the program and all of the program content will still be present during reproducing.

It should be appreciated that when a video tape is recorded on one apparatus and is played back on another, there is an interchange problem which can create time variations that are greatly in excess of the differnece that may be programmed into the tracking one-shot. Therfore, to insure that the program will be actually expanded or compressed by the desired amount, it is necessary that the apparatus still maintain control track lock of the capstan servo. When such is done, then the rate generator operation from the tracking one-shot will effectively perform the time expansion or contraction that is programmed into the apparatus as is desired.

To accomplish the asynchronous playback that has been described, reference is made to Figure 9b which has the reference vertical signal applied via input line 730 as previously described. During normal playback, the output of the one-shot 732 provides a delay time that is a function of a control track phase adjustment potentiometer which is located on the front panel of the apparatus and which is a part of the operator controlled machine control system. The output from the tracking one-shot 732 appears on line 734 to the divider 736 and the frame output on the line 738 is used to control the up/down line of the counter 726 shown in Figure 9a. The value of the counter is latched into the digital-to-analog converter 724 by the control track playback frame pulse on line 722 which thereby generates a control track error voltage that appears at the output of the digital-to-analog converter 724 and which ultimately results in a signal at output line 326 that is one of the inputs to the analog-to-digital converter circuit 320 shown in Figure 7b. The circuitry of Figure 7b converts the analog value to an 8-bit word that is applied to the microprocessor 30 through the multiplexed analog-to-digital converter 320 shown in Figure 7. The microprocessor converts the data to a 16-bit word which it applies to an inner loop reference counter 744 (Figure 9b) which clocks a D flip-flop 746 that operates as a divide-by-two and provides the reference input signal on line 644 which closes the control track servo loop.

When the apparatus is operating in the asynchronous playback mode, the microprocessor 30 is programmed to write a high signal to a latch 748 which has an output line 750 that extends to gates 752 and 754 (Figure 9b). The high signal on line 750 effectively disables the loading operations that would occur in the divider 736 and it additionally forces the input to the tracking one-shot 732 high to enable it to begin counting. The tracking one-shot is thereby changed to be a rate generator that produces an output vertical reference frequency that is programmable by the microprocessor. Since the input to the counter 732 is the studio reference clock frequency, the output can be programmed to be different from the normal reference vertical by the expression

$$\frac{F\ input\ clock}{Normal\ count} \pm \frac{F\ input\ clock}{Programmed\ count}$$

The programmed count can be derived from a local or a remote source. It should be appreciated that since the tape will be moving at a speed that is slightly different from the normal record or reproduce speed to accomplish the desired time compression or expansion, the automatic scan tracking head will occasionally be required to make a track jump. For this reason, the automatic scan tracking servo and time base corrector operation is switched from normal play to variable play so that the desired track jumps can be carried out.

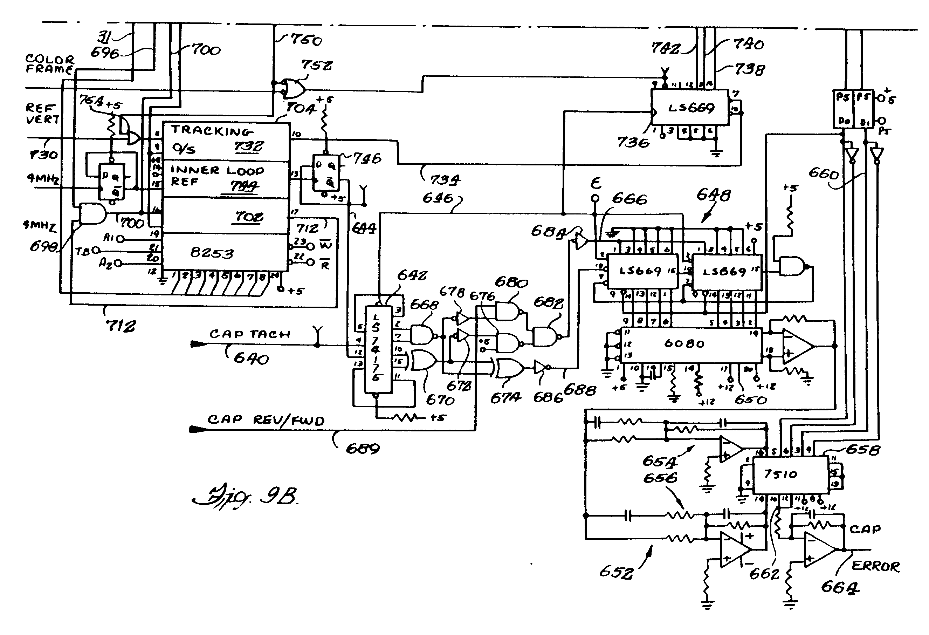

As has been previously described with the block diagram of the capstan servo shown in 8, the variable potentiometer 196 for controlling the slow motion reproducing of the apparatus provides an analog potentiometer signal, which is Converted into a 8-bit word that is applied to the microprocessor. The microprocessor 31 then processes the 8-bit data word to provide a non-linear function for the purpose of accomplishing the desired feel of the apparatus in terms of the speed of response as a function of the amount of arcuate movement of the potentiometer which is also a function of the speed in which the capstan is being driven. This operation can be more readily appreciated from Figure 10a which shows a transfer function of the speed versus the processed input data word from the potentiometer 196. As has been described with respect to Figure 8, the microprocessor loads a 16-bit word into counter 164 via load lines 168 (which in actuality is the data bus 31) which in Figure 9b comprises the inner loop reference counter 744 of the timer chip 704. By changing the 16-bit number that is applied to the counter, a different output value on line 162 is applied to the up/down counter 154 which effectively changes the speed of the capstan by virtue of the inner loop control.

While the microprocessor receives an 8-bit word, it performs a multiplication function to obtain the 16-bit word which is applied to the counter 164. The result is the non-linear transfer function as shown in Figure 10a wherein the speed increases as the value of the 16-bit number decreases. The output speed is inversely proportional to the value of the number applied to the counter. The transfer function shown in Figure 10a is undesirable for the reason that it does not provide the desirable feel to an operator for controlling the speed during the variable motion reproducing.

When the unit is operating at very slow speeds, a two unit angular change of the potentiometer may result in a one percent change in the reproducing speed and there therefore is no significant stepped speed change involved in making the two unit angular change of the potentiometer. However, when the apparatus is reproducing at higher speeds, i.e., close to normal reproducing speed or faster than normal speeds, a two unit angular change in the setting of the potentiometer may result in a 20 percent change in the output frequency which can make a very pronounced and stepped speed change in the image being viewed.

Accordingly, it is desired to change the shape of the transfer function in a manner shown in Figure 10b and this is accomplished by further processing the 8-bit word beyond a mere multiplication. This is accomplished by multiplying the 8-bit word by the function

$$K + \frac{(8 - bit\ word)^3}{255}$$

This results in the representation shown by the solid line of Figure 10b. The microprocessor also limits the minimum number that can be provided to the counter so as to limit the output speed at 1-1/2 times the normal reproducing speed. The curve of Figure 10b then is shaped to provide smaller increments of actual speed change per unit change of the position of the potentiometer until it reduces to below normal play speed whereupon changes of values of the potentiometer more rapidly change the speed in the slower speeds. The dotted representations on each side of the solid representation show possible variations in the function that can be accomplished by varying the expression. The number 255 diviser of the function is intended to maintain the 16-bit word within the limits of zero and 64,000, the range of the 16-bit counter. If the ultimate multiplication result was greater than 64,000, then a discontinuity in the curve could result which would be extremely undesirable.

In accordance with another aspect of the non-linearization of the slow motion variable potentiometer control, the viewer is much more able to observe the visual effects of the rate of change of the variable motion image at high speeds than at low speeds. Stated in other words, at very slow slow motion speeds for example, in the range of 1/30 to 1/15 of normal speed, changes between one speed and another can be done rapidly without providing any disturbing visual effect to an observer. However, at high speeds, e.g., a change of from normal to 1-1/2 times normal speed cannot be done rapidly without providing a significant disturbing effect on a viewer. Therefore, it is desirable to make changes between speeds at high speed more slowly than is done during changes at slow slow motion speeds. Such variation is also accomplished by the apparatus of the present invention and this is illustrated by Figures 10c and 10d. In Figure 10c an instantaneous change in the potentiometer from zero to 1-1/2 times the normal play speed, e.g., the input line shown by the solid representation of Figure 10c results in an actual response time to accomplish the speed change that is shown by the dotted representation. Similarly, if the speed is instantaneously changed from 1-1/2 times play speed down to zero as shown in the right of Figure 10c, the actual speed will ramp down as shown by that dotted representation.

The present apparatus desirably varies the response, effectively delaying it when the speed is operating close to normal speed and above. This is accomplished by inserting a time delay into the response wherein the amount of delay provided is a function of the actual speed that the tape is moving. The speed that is required dictates a certain 16-bit number that is applied to the counter 164 and this number is compared with the actual speed in order to increment or decrement the count that is to be applied to the counter. If the actual speed is one that is in the range of the normal playback speed or faster, then an increased time delay will be provided in reaching the required number so that the rate of change of speed will be decreased as the actual speed is increased. This is shown in Figure 10d wherein the actual speed response to an instantaneous change from zero to 1-1/2 times play shows a response that rises rapidly, i.e., very little delay in the early portion thereof and then increased amounts of delay are inserted so that the rate of change of speed is decreased as the actual speed increases. When the speed is instantaneously changed from 1-1/2 times normal to zero, the actual speed change is delayed to change more slowly from the higher speeds and changes more rapidly at the slower speeds.

Although the various servo systems that are shown and described herein are primarily intended for use with a helical wrap recording and reproducing apparatus, the system could also be used for other types of recording and reproducing apparatus. The helical wrap recording and reproducing apparatus applies tracks to a tape during recording which are at an inclined angle relative to the longitudinal direction of the tape. Since the apparatus may preferably record a full field of information for each revolution of the scanning drum, each track will have a field of video information thereon, which for a NTSC format system will include 262-1/2 lines of video information and for a PAL or SECAM format, 312-1/2 lines of video information. The helical apparatus is also preferably equipped with automatic scan tracking as previously described, wherein the transducing head is attached to the end of an elongated movable element which can be moved transversely relative to the longitudinal direction of the tracks to thereby accurately follow a track or jump from one track to another during special effects reproducing.

Conclusion

From the foregoing detailed description, it should be appreciated that an improved non-linear control for the capstan servo has been shown and described which provides desirable feel to an operator who is controlling the apparatus for slow motion as well as fast motion reproducing effects. The manner in which the non-linearity is provided enables the operator to accurately control the speed of the visual image during variable motion reproducing and to change between one variable speed and another in a way which does not provide a visually disturbing image to a viewer.

**Claims**

1. A speed control apparatus for controlling the transport speed of a tape in a magnetic tape recording and reproducing machine, comprising a servo (34) for moving the tape at a transport speed determined by the frequency of a reference signal, and, for providing adjustment of the transport speed throughout a range, a programmable counter (164) which divides the frequency of an input signal by a variable preselected number to provide the reference signal, positionally adjustable means (196) for providing a speed control signal, and processing means including a microprocessor (30) for providing said preselected number to said counter (164), the processing means providing the speed control signal in the form of a digital word of which the value corresponds to the position of the positionally adjustable means; characterised in that the microprocessor performs a multiplication of the said digital word by a non-linear function to provide said variable preselected number, the input signal for the counter (164) is a high frequency clock timing signal, and the output of said counter is the reference signal.

2. A speed control apparatus according to claim 1 in which the processing means is responsive to changes in the said position as represented by the said speed control signal such that the preselected number varies non-linearly with incremental changes in the speed control signal whereby to produce a lesser percentage change in the speed of the tape at relatively fast speeds and a greater percentage change at slow speeds.

3. A speed control apparatus according to claim 1 or 2 wherein said positionally adjustable means (196) comprises a potentiometer which provides an analog voltage signal that is directly proportional to the setting of the potentiometer throughout its operating range and the processing means comprises a digital to analog converter for converting the analog voltage to a corresponding digital word.

4. A speed control according to claim 3 wherein said digital word provided by said analog-to-digital converter comprises an 8-bit digital word, said processing means multiplying the value of the 8-bit word by the function

$$K + \frac{(8 - \text{bit word})^3}{255}$$

where K is a constant.

5. A speed control apparatus according to any foregoing claim wherein said processing means in response to a change in the speed control signal inserts a delay in the changing of the preselected number that is provided to said counter, the delay being greater at high tape speeds than at slow speeds.

6. A speed control apparatus according to any foregoing claim in which the video tape recording and reproducing machine has a rotating scanning drum with a movable element carrying a transducing head that is transversely movable relative to the longitudinal orientation of a track to be reproduced, and a servo means (44) for controlling the transverse movement to accurately follow a track during reproducing of a track and to selectively automatically position the head to begin following the next desired track to be reproduced subsequently of the completion of reproducing of a track, the speed control apparatus being arranged for non-linearly varying the speed of special motion effects produced by the machine.

**Patentansprüche**

1. Geschwindigkeitsregelanordnung zur Regelung der Transportgeschwindigkeit eines Bandes in einer Magnetband-Aufzeichnungs und Wiedergabemaschine mit einer Servoanordnung (34) zur Bewegung des Bandes mit einer durch ein Referenzsignal festgelegten Transportgeschwindigkeit, bei der zur Einstellung der Transportgeschwindigkeit in einem Bereich ein Zähler (164), welcher die Frequenz eines Eingangszeittaktsignals durch eine variable vorgewählte Zahl zwecks Erzeugung des Referenzsignals teilt, eine verstellbare Anordnung (196) zur Erzeugung eines Geschwindigkeitsregelsignals sowie eine einen Mikroprozessor (30) enthaltende Prozessoranordnung zur Eingabe der vorgewählten Zahl in den Zähler (164) und zur Erzeugung des Geschwindigkeitsregelsignals in Form eines Digitalwortes, dessen Wert der Stellung der verstellbaren Anordnung entspricht, vorgesehen sind, **dadurch gekennzeichnet,** daß der Mikroprozessor zur Erzeugung der variablen vorgewählten Zahl das Digitalwort mit einer nichtlinearen Funktion multipliziert, daß das Eingangssignal für den Zähler (164) ein hochfrequentes Zeittaktsignal ist und daß das Ausgangssignal des Zählers das Referenzsignal ist.

2. Geschwindingkeitsregelanordnung nach Anspruch 1, in welcher die Prozessoranordnung derart auf Änderungen in der durch das Geschwindigkeitsregelsignal repräsentierten Einstellung anspricht, daß sich die vorgewählte Zahl nichtlinear mit inkrementellen Änderungen des Geschwindigkeitsregelsignals ändert, um eine kleinere prozentuale Änderung der Bandgeschwindigkeit bei relativ großen Geschwindigkeiten und eine größere prozentuale Änderung bei kleinen Geschwindigkeiten zu realisieren.

3. Geschwindigkeitsregelanordnung nach Anspruch 1 oder 2, in der die verstellbare Anordnung (196) ein Potentiometer umfaßt, das ein analoges Spannungssignal liefert, das direkt proportional zur Einstellung des Potentiometers in dessen Betriebsbereich ist, und in der die Prozessoranordnung einen Analog-Digital-Umsetzer umfaßt, der die Analogspannung in ein entsprechendes Digitalwort umsetzt.

4. Geschwindigkeitsanordnung nach Anspruch 3, in der das durch den Analog-Digital-Umsetzer erzeugte Digitalwort ein Digitalwort mit 8 Bit ist und in der die Prozessoranordnung den Wert des Wortes mit 8 Bit mit der Funktion

$$K + \frac{(8 - \text{Bit} - \text{Wort})^3}{255}$$

eine Konstante ist.

5. Geschwindigkeitsregelanordnung nach den vorhergehenden Ansprüchen, in der die Prozessoranordnung als Funktion einer Änderung des Geschwindigkeitsregelsignals eine Verzögerung in die Änderung der durch den Zähler erzeugten vorgewählten Zahl einfügt, welche bei höheren Bandgeschwindigkeiten größer als bei kleineren Bandgeschwindigkeiten ist.

6. Geschwindigkeitsregelanordnung nach den vorhergehenden Ansprüchen, in der die Videoband-Aufzeichnungs- und Wiedergabemaschine eine rotierende Abtasttrommel mit einem einen Wandlerkopf tragenden Bewegungselement, das relativ zur Längsorientierung einer abzuspielenden Spur quer bewegbar ist, und eine Servoanordnung (44) zur Steuerung der Querbewegung aufweist, derart, daß bei Abspielung einer Spur ein genaues Überlaufen dieser Spur erfolgt und daß bei Beendigung der Abspielung einer Spur der Kopf selektiv automatisch so eingestellt wird, daß er die nächste gewünschte abzuspielende Spur zu überlaufen beginnt, und in der eine Ausgestaltung für eine nichtlineare Änderung der durch die Maschine realisierten Geschwindigkeit von Spezialbewegungseffekten vorgenommen ist.

## Revendications

1. Un dispositif de commande de vitesse destiné à commander la vitesse de transport d'une bande dans un appareil d'enregistrement et de reproduction à bande magnétique, comprenant : un asservissement (34) destiné à déplacer la bande à une vitesse de transport qui est déterminée par la fréquence d'un signal de référence, et pour réaliser le réglage de la vitesse de transport sur toute l'étendue d'une plage ; un compteur programmable (164) qui divise la fréquence d'un signal d'entrée par un nombre variable présélectionné pour produire le signal de référence ; des moyens réglables en position (196) pour fournir un signal de commande de vitesse ; et des moyens de traitement incluant un microprocesseur (30) pour délivrer ledit nombre présélectionné audit compteur (164), les moyens de traitement fournissant le signal de commande de vitesse sous la forme d'un mot numérique dont la valeur correspond à la position des moyens réglables en position ; caractérisé en ce que le microprocesseur effectue une multiplication dudit mot numérique par une fonction non linéaire pour fournir ledit nombre variable présélectionné, en ce que le signal d'entrée pour le compteur (164) est un signal de temporisation d'horloge haute fréquence, et en ce que la sortie dudit compteur est le signal de référence.

2. Un dispositif de commande de vitesse selon la revendication 1, dans lequel les moyens de traitement réagissent à des changements dans ladite position telle qu'elle est représentée par ledit signal de commande de vitesse de façon que le nombre présélectionné varie d'une manière non linéaire en fonction de changements incrémentiels du signal de commande de vitesse, pour produire ainsi un plus faible pourcentage de changement de la vitesse de la bande à des vitesses relativement rapides, et un plus grand pourcentage de changement à des vitesses lentes.

3. Un dispositif de commande de vitesse selon la revendication 1 ou 2, dans lequel les moyens réglables en position (196) comprennent un potentiomètre qui fournit un signal de tension analogique qui est directement proportionnel au réglage du potentiomètre sur toute sa plage de fonctionnement, et en ce que les moyens de traitement comprennent un convertisseur numérique vers analogique pour convertir la tension analogique en un mot numérique correspondant.

4. Un dispositif de commande de vitesse selon la revendication 3, dans lequel ledit mot numérique que fournit le convertisseur analogique vers numérique consiste en un mot numérique de 8 bits, lesdits moyens de traitement multipliant la valeur du mot de 8 bits par la fonction :

$$K + \frac{(\text{mot de 8 bits})^3}{255}$$

dans laquelle K est une constante.

5. Un dispositif de commande de vitesse selon l'une quelconque des revendications précédentes, dans lequel lesdits moyens de traitement réagissent à un changement du signal de commande de vitesse en introduisant un retard dans le changement du nombre présélectionné qui est délivré audit compteur, le retard étant plus élevé aux vitesses de bande élevées qu'aux vitesses faibles.

6. Un dispositif de commande de vitesse selon l'une quelconque des revendications précédentes, dans lequel l'appareil d'enregistrement et de reproduction vidéo à bande comporte un tambour de balayage tournant, avec un élément mobile portant une tête de transduction qui peut être déplacée transversalement par rapport à l'orientation longitudinale d'une piste à reproduire, et des moyens d'asservissement (44) destinés à commander le déplacement transversal pour suivre une piste de façon précise pendant la reproduction d'une piste, et pour positionner automatiquement et sélectivement la tête pour qu'elle commence à suivre la piste désirée suivante à reproduire, après l'achèvement de la reproduction d'une piste, le dispositif de commande de vitesse étant conçu de façon à faire varier de manière non linéaire la vitesse d'effets de mouvements spéciaux produits par l'appareil.

Fig. 1.

MACHINE COMMUNI-CATIONS MODES & DATA  38

SCANNER SERVO  36

CAPSTAN SERVO  34

REEL SERVO  32

BOARD #1 (SERVO)

AST IRQ

31  31  31  30  31

SYSTEM CLK

μ PROC (6802)

31  31  31  31

BOARD #2 (AST)

REFERENCE GENERATOR  40

AST SERVO  44

TAPE SYNC PROC.  46

TBC INTERFACE  50

REF COMP SYNC  42

TAPE COMPOSITE SYNC  48

Fig. 5.

368  F
SCAN IN TACH  394

JUMP DIRECTION

362  370
COUNTER  F1
O/S  364  ΔT
COUNTER  F2

314
D/A (AC ERROR)

218
216

U/D CLOCK LOGIC  370

379  376
U/D CNTR

AST ERROR  210

396  360  366  372  398  374  378  380
CLK

D/A (DC ERROR)  382

386  384

JUMP  392

LATCH  390

30

μ PROC

31

AST ERROR CORRECT

15

Fig. 2

SCANNER TACH
REEL TACH
CAPSTAN TACH
REF. VERT
FRAME

FREQUENCY PHASE & TIMING

30 IRQ

FREQUENCY PHASE & TIMING

DELAY GEN
FREQ GEN
TIMING GEN

ASST ERROR
(TENSION ARM ERROR
(MOTOR CURRENT

ANALOG IN & A/D

µ PROC

ANALOG OUT & D/A

CAPSTAN
REEL
SCANNER
AST

MODES

DATA BUS

DATA

525/625
PAL/SECAM

CONTROL

DATA BUS

STATUS

DATA

Fig. 6.

TAPE VERT

VERT SYNC REGEN.

VERT

TBC VERT

252

VERT PROC

244

246

VERT BLANK

IMHZ

TAPE COMP
SYNC

240    242

EQUALIZE SEPARATOR

HORZ SYNC SEPARATOR

258

CLK DIVIDER

260

REF

256

HORZ

254

250

VCO

ERROR

248

TAPE HORZ

30

µ PROC

Fig. 3a

Fig. 3b

Fig. 4.

Fig. 8.

Fig. 7A.

*Fig. 7B.*

Fig. 9A.

Fig. 9B.

Fig. 10.